# EUROPÄISCHE PATENTSCHRIFT

(11) **EP 1 818 543 B1**
(45) Veröffentlichungstag und Bekanntmachung des Hinweises auf die Patenterteilung: **23.01.2013**
(21) Anmeldenummer: 06026890.1
(22) Anmeldetag: 27.12.2006
(51) Int. Cl.: F04D 29/24

(54) **Schaufel für ein Schaufelrad**
Blade for impeller
Palette pour une roue à palettes

(30) Priorität: 14.02.2006 AT 2282006
(43) Veröffentlichungstag der Anmeldung: 15.08.2007
(73) Patentinhaber: Riegerbauer, Hermann, 8430 Leibnitz (AT)
(72) Erfinder: Riegerbauer, Hermann, 8430 Leibnitz (AT)
(74) Vertreter: Puchberger, Peter

(56) Entgegenhaltungen:
- DE-A1- 3 118 648
- DE-U1- 29 904 668
- GB-A- 524 703
- JP-A- 53 072 206
- US-A1- 1 622 930
- US-A1- 2 753 808

## Beschreibung

Die Erfindung betrifft eine Schaufel für ein Schaufelrad gemäß dem Oberbegriff des Anspruch 1.

Im Stand der Technik sind einteilige, durchgehende Schaufeln für Schaufelräder bekannt. Durch die geschlossene Bauweise dieser bekannten Schaufeln treten störende Verwirbelungen an deren Rückseite auf.

Das Dokument DE 3 118 648 A1 zeigt eine Schaufel für ein Schaufelrad, wobei die Schaufel mehrere Elemente umfasst, die durch einen Zwischenraum getrennt sind. Das Dokument US 2 753 808 zeigt eine Schaufel für ein Schaufelrad, wobei einzelne Schaufeln vorgesehen sind, die mehrere Elemente umfassen, wobei die Elemente durch einen Zwischenraum getrennt und lamellenartig versetzt angeordnet sind. Die gezeigten Schaufelelemente sind in Anströmrichtung gekrümmt und in Ausströmrichtung gestreckt. Schließlich zeigt die US 1 622 930, entsprechend dem Oberbegriff des Anspruchs 1, eine Schaufel für ein Schaufelrad, wobei die Schaufel mehrere Elemente umfasst, die durch einen Zwischenraum getrennt und lamellenartig versetzt angeordnet sind, und wobei die Elemente schaufelartig ausgebildet sind und in Anströmrichtung eine Krümmung aufweisen und in Ausströmrichtung gestreckt sind.

Die bekannten Schaufelkonstruktionen sind zwar mehrteilig aufgebaut, dies ist jedoch, wie sich gezeigt hat, nicht ausreichend, um die störenden Verwirbelungen an der Rückseite der Schaufelelemente hinreichend zu vermeiden.

Eine Aufgabe der Erfindung ist es daher, eine Schaufel für ein Schaufelrad zu schaffen, welche eine Verbesserung der Verwirbelung an der Schaufelrückseite erzielt.

Diese Aufgabe wird erfindungsgemäß mit einer Schaufel gemäß Anspruch 1 gelöst.

Es kann auch von Vorteil sein, dass die Winkel der Elemente zu einer gedachten Schaufelachse von innen nach außen größer werden.

Die Erfindung samt weiterer Vorteile ist im Folgenden anhand einiger nicht einschränkender Ausführungsbeispiele näher erläutert, welche in den Zeichnungen dargestellt sind. In dieser zeigen:
Fig. 1 eine schematische Darstellung eines Querschnitts eines Schaufelrades mit bekannten Schaufeln aus dem Stand der Technik;
Fig. 2 eine schematische Darstellung eines Querschnitts eines erfindungsgemäßen Elements;
Fig. 3 eine schematische Darstellung eines Querschnitts eines Schaufelrades mit Schaufeln aus erfindungsgemäßen Elementen;
Fig. 4 eine schematische Darstellung eines Querschnitts eines Schaufelrades mit Schaufeln aus erfindungsgemäßen Elementen und einer gedachten Mittellinie;
Fig. 5 eine schematische Darstellung eines Querschnitts eines alternativen Schaufelrades mit Schaufeln aus erfindungsgemäßen Elementen.

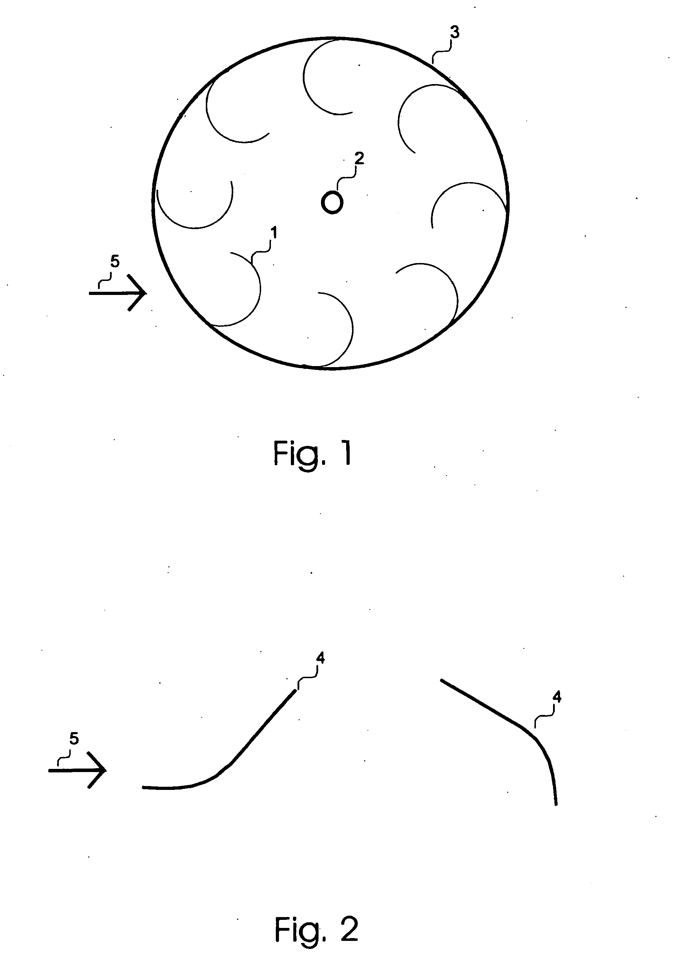

Fig. 1 ist die schematische Darstellung eines Schnittes durch ein bekanntes Schaufelrad (3). Gemäß Fig. 1 umfasst ein Schaufelrad (3) mindestens eine Schaufel (1) und eine Nabe (2).

In der schematischen Darstellung in Fig. 2 sieht man den Schrägriss eines erfindungsgemäßen Elementes (4), einmal in Anströmrichtung und einmal in Ausströmrichtung. Die Strömungsrichtung des Wasser (5) und die Drehrichtung des Schaufelrades (6) sind eingezeichnet. Das Element (4) kann eine Krümmung an der Seite, an der das Elemente Wasserkontakt hat, aufweisen und zur Nabe (2) bzw. zum den inneren Ende des Elementes (4) hin gestreckt sein oder kann gerade sein. Als besonders vorteilhaft hat es sich erwiesen, wenn die Krümmung konkav oder konvex ist.

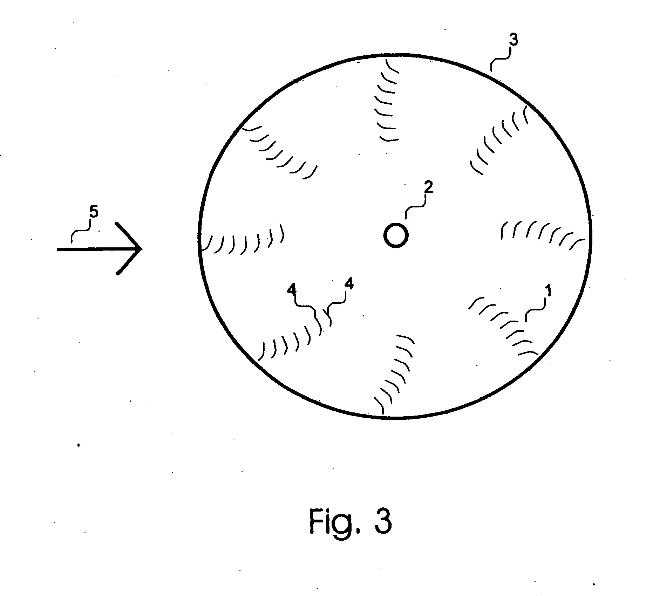

Eine besondere Ausführungsform der Erfindung ist in Fig. 3 gezeigt. Mehrere aus mehreren Elementen (4) aufgebaute Schaufeln (1) sind in einem Schaufelrad (3) angebracht. Durch Drehen der gesamten Schaufel (1) um die Nabe (2) des Schaufelrads (3) wird die Stellung der Elemente (4) zur Strömung laufend verändert. Beim Eintauchen der Schaufel (1) (ein Element (4) nach dem anderen) weist das äußerste Element (4) eine Stellung mit sehr geringem Strömungswiderstand auf. Nach einem Weiterdrehen der Schaufel (1) taucht auch das nächstinnere Element (4) in die Strömung. Bei einer Stellung senkrecht zur Strömung wirken die Elemente (4) beinahe wie eine Schaufel (1) die nur aus einem Teil besteht. Bei anderen Stellungen der erfindungsgemäßen Schaufel (1) kann das Wasser durch die Zwischenräume strömen. Diese Zwischenräume charakterisieren lamellen- bzw. schalossienartige Schaufeln (1). Störende Verwirbelungen an der Rückseite der Schaufel (1) werden reduziert und dem Lauf des Schaufelrades (3) entgegnwirkende Kräfte werden reduziert. Die aus mehreren Elementen (4) aufgebaute Schaufel (1)bzw. die gedachte Mittelinie (7) kann sowohl gekrümmt als auch gerade sein.

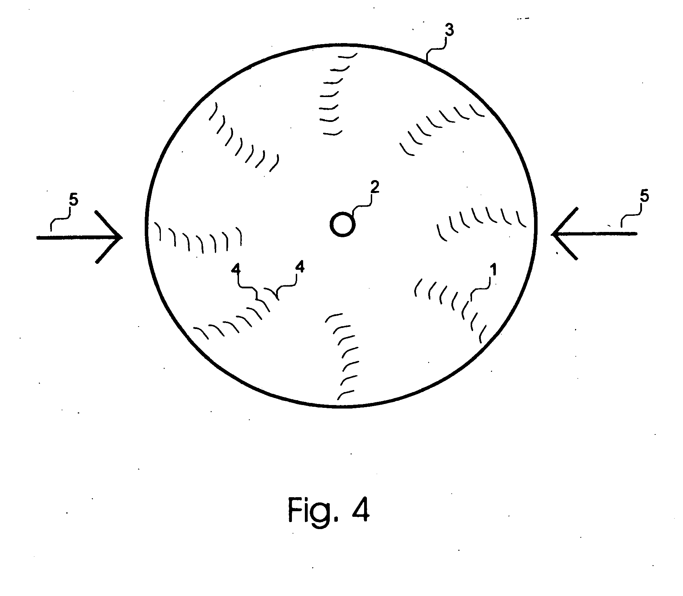

Das Schaufelrad (3) in der erfindungsgemäßen Ausführungsform mit den aus Elementen (4) aufgebauten Schaufeln (1) kann, wie in Fig. 4 gezeigt, aus beiden Richtungen (5) angeströmt werden. Abhängig von der Stärke der Strömung kann es notwendig sein, dass die Schaufeln (1) in offener oder geschlossener Weise in Strömungsrichtung ausgerichtet sind.

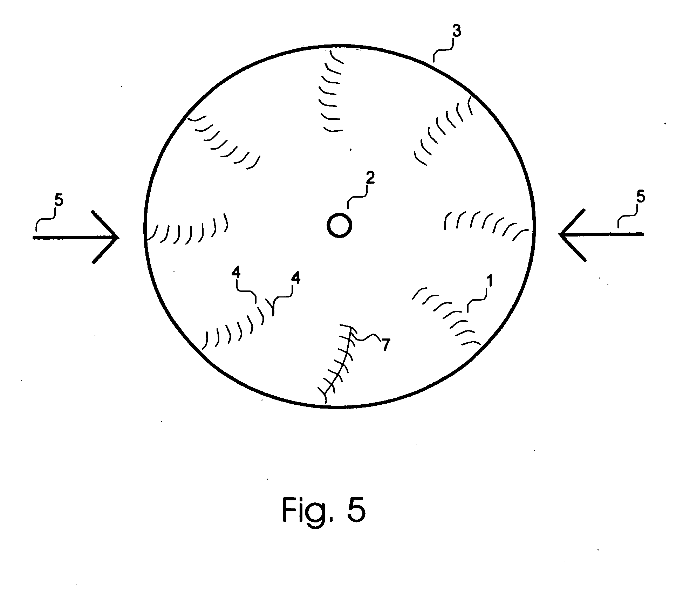

Fig 5. zeigt eine besonders wirkungsvolle Ausführungsform der gegenständlichen Erfindung. Der Längsschnitt einer einteiligen Schaufel (1) hat eine Mittellinie (7). Diese Mittellinie (7) soll der Krümmung der Schaufel (1) entsprechen. Mindestens zwei der Elemente (4) der gegenständlichen Erfindung können so an einer gedachten Mittelinie (7) angeordnet werden, dass der Winkel zwischen der gedachten Mittellinie (7) und dem ersten Element (4) kleiner ist als der Winkel zwischen gedachten Mittellinie (7) und dem zweiten Element (4). Die Schnittpunkte der Elemente (4) und der gedachten Mittellinie (7) können den gleichen Abstand zueinander auf der gedachten Mittellinie (7) haben. Die Abstände können aber auch in einer veränderten Ausführungsform unterschiedliche Abstände haben. In einer besondere wirkungsvollen Ausführungsform können die Elmente (4) unterschiedlich groß sein. Die Elemente (4) können von außen nach innen kleiner werden. Damit bedingt kann auch der Abstand zwischen den Elementen (4) unterschiedlich sein. Besonders effektiv hat sich erwiesen, dass die Abstände von außen nach innen kleiner werden.

## Patentansprüche

1. Schaufel (1) für ein Schaufelrad (3), wobei die Schaufel (1) mindestens zwei Elemente (4) umfasst, die durch einen Zwischenraum getrennt und lamellenartig versetzt angeordnet sind, wobei die Elemente (4) schaufelartig ausgebildet sind, und in Anströmrichtung eine Krümmung aufweisen und in Ausströmrichtung gestreckt sind, **dadurch gekennzeichnet, dass** die Elemente (4) in Anströmrichtung von außen nach innen kleiner werden und bei mehr als zwei Elementen (4) die Abstände zwischen den Elementen (4) von außen nach innen kleiner werden, wobei der Längsschnitt der Schaufel (1) eine gedachte Mittellinie (7) bildet, und wöbei mindestens zwei Elemente (4) so an der gedachten Mittellinie (7) angeordnet sind, dass der Winkel zwischen der gedachten Mittellinie (7) und einem ersten Element (4) kleiner ist als der Winkel zwischen der gedachten Mittellinie (7) und einem zweiten Element (4).

2. Schaufel (1) nach Anspruch 1, **dadurch gekennzeichnet, dass** die Winkel der Elemente (4) zu der gedachten Mittellinie (7) von innen nach außen größer werden.

3. Schaufel (1) nach einem der vorhergehenden Ansprüche, **dadurch gekennzeichnet, dass** die Krümmung der Elemente (4) konkav oder konvex ist.

4. Schaufelrad mit einer Schaufel (1) nach einem der vorhergehenden Ansprüche.

## Claims

1. Blade (1) for an impeller (3), the blade (1) having at least two elements (4) that are separated by an intermediate space and are offset from one another in a lamellar arrangement, the elements (4) being of blade-like configuration and having a curvature in the direction of inflow and being elongated in the direction of outflow, **characterised in that** the elements (4) become smaller from the outside inwards, in the direction of inflow and, where there are more than two elements (4), the distances between the elements (4) become smaller from the outside inwards, the longitudinal section of the blade (1) forming an imaginary centre line (7), and at least two elements (4) being arranged on the imaginary centre line (7) such that the angle between the imaginary centre line (7) and a first element (4) is smaller than the angle between the imaginary centre line (7) and a second element (4).

2. Blade (1) according to claim 1, **characterised in that** the angles of the elements (4) to the imaginary centre line (7) become greater from the inside outwards.

3. Blade (1) according to one of the preceding claims, **characterised in that** the curvature of the elements (4) is concave or convex.

4. Impeller having a blade (1) according to one of the preceding claims.

## Revendications

1. Aube (1) pour une roue (3) à aubes, l'aube (1) comprenant au moins deux éléments (4), qui sont séparés par un espace intermédiaire et qui sont décalés à la manière de lamelles, les éléments (4) étant constitués en étant de type à aube et ayant une courbure dans le sens d'entrée et étant allongés dans le sens de sortie, **caractérisée en ce que** les éléments (4) deviennent de plus en plus petits de l'extérieur vers l'intérieur dans le sens d'entrée et, pour plus de deux éléments (4), les intervalles entre les éléments (4) deviennent de plus en plus petits de l'extérieur vers l'intérieur, la coupe longitudinale de l'aube (1) formant une ligne (7) médiane imaginaire, au moins deux éléments (4) étant disposés sur la ligne (7) médiane imaginaire, de manière à ce que l'angle entre la ligne (7) médiane imaginaire et un premier élément (4) soit plus petit que l'angle entre la ligne (7) médiane imaginaire et un deuxième élément (4).

2. Aube (1) suivant la revendication 1, **caractérisée en ce que** les angles des éléments (4) avec la ligne (7) médiane imaginaire deviennent de plus en plus grands de l'intérieur vers l'extérieur.

3. Aube (1) suivant l'une des revendications précédentes, **caractérisé en ce que** la courbure de l'élément (4) est concave ou convexe.

4. Roue à aube comprenant une aube (1) suivant l'une des revendications précédentes
